# EUROPÄISCHE PATENTSCHRIFT

(11) **EP 1 655 515 B1**
(45) Veröffentlichungstag und Bekanntmachung des Hinweises auf die Patenterteilung: **21.02.2007**
(21) Anmeldenummer: 05110321.6
(22) Anmeldetag: 03.11.2005
(51) Int. Cl.: F16H 47/04

(54) **Leistungsverzweigtes hydromechanisches Getriebe mit Summiergetriebemittel**
Power-split hydromechanical transmission with summing transmission means
Transmission hydromécanique à deux voies de puissance avec moyens de transmission sommateurs

(30) Priorität: 04.11.2004 DE 102004053254
(43) Veröffentlichungstag der Anmeldung: 10.05.2006
(60) Teilanmeldung: 06121775.8
(73) Patentinhaber: LOHMANN & STOLTERFOHT GMBH, 58455 Witten (DE)
(72) Erfinder: Meise, Andreas, 44795 Bochum (DE); Langenbeck, Bernhard, 44267 Dortmund (DE); Reiblein, Steffen, 76707 Hambrücken (DE); Nagel, Frank, 89073 Ulm (DE)
(74) Vertreter: Kietzmann, Lutz

(56) Entgegenhaltungen:
- US-A- 3 396 607
- US-A- 3 803 843
- PATENT ABSTRACTS OF JAPAN Bd. 017, Nr. 660 (M-1522), 7. Dezember 1993 (1993-12-07) -& JP 05 215200 A (DAIKIN IND LTD), 24. August 1993 (1993-08-24)

## Beschreibung

Die vorliegende Erfindung betrifft eine Getriebeanordnung, insbesondere für einen Antrieb eines Fahrzeuges, mit einem hydrostatischen Getriebe, dem mindestens eine Planetenstufe nachgeschaltet ist, wobei die Ankopplung der Planetenstufe an das hydrostatische Getriebe über zwischengeschaltete Getriebemittel zur Drehzahlüberlagerung innerhalb der Planetenstufe erfolgt.

Das Einsatzgebiet derartiger Getriebeanordnungen erstreckt sich vornehmlich auf Fahrzeuge, insbesondere Erdbearbeitungsfahrzeuge und dergleichen. Die spezielle Getriebeanordnung dient als kontinuierlich variables Getriebe zum Antrieb solcher Fahrzeuge.

Aus dem allgemeinen Stand der Technik gehen gattungsgemäße Getriebeanordnungen hervor, bei denen die mechanische Leistungsübertragung mit einem stufenlos verstellbaren hydrostatischen Getriebe kombiniert wird. Zweck dieser Getriebeanordnung ist es, den Wandlungsbereich eines hydrostatischen Fahrantriebs zu vergrößern und ein Schalten ohne Zugkraftunterbrechung zu ermöglichen. Typischerweise liefert ein hydrostatisches Getriebe, das aus einer Hydraulikpumpe mit variabler Drehzahl und einem nachgeschalteten Hydraulikmotor besteht, eine kontinuierlich variable Ausgangsdrehzahl an die Räder oder Raupen des Fahrzeuges. Insbesondere kann die Drehzahl kontinuierlich durch Steuerung der Verdrängung der verstellbaren Hydraulikpumpe variiert werden. Um nun einen weiten Fahrbereich abzudecken, wird das Motordrehmoment zwischen dem hydrostatischen Getriebe und einem hiermit gekoppelten mechanischen Getriebe aufgeteilt. Das mechanische Getriebe, in Form mindestens einer Planetengetriebestufe, hat eine Anzahl von Getriebebereichen entsprechend den unterschiedlichen Betriebsdrehzahlen des Radantriebs. Die Kombination des hydrostatischen Getriebes mit dem mechanischen Getriebe ermöglicht es, ein kontinuierlich variables Getriebe bereitzustellen, das über einen weiteren Bereich von Drehzahlen arbeitet, als es unter Verwendung eines hydrostatischen Getriebes alleine möglich ist.

Aus der DE 101 44 943 A1 geht eine derartige Getriebeanordnung hervor. Die Getriebeanordnung umfasst ein hydrostatisches Getriebe, das mit einem mechanischen Getriebe gekoppelt ist, um einen ersten Fahrbereich und einen zweiten Fahrbereich auszuwählen. Eine Steuervorrichtung führt einen Schaltvorgang vom hierfür vorgesehenen ersten Getriebebereich zu dem zweiten Getriebebereich aus. Dieser Stand der Technik löst das Problem im Fahrbereich um den Stillstand des Fahrzeuges herum die gesamte Antriebsleistung nicht leistungsverzweigt zu wandeln, so dass ein Reversieren des Fahrzeuges rein hydrostatisch ohne Schaltung einer Kupplung im Stillstand erfolgen kann, und dass in diesem Fahrbereich, in welchem für die Fahrzeuge meist der Hauptarbeitsbereich liegt, keine Blindleistung im Hydraulikkreislauf auftritt. Eine Schaltung der Kupplungen soll nur beim Wechsel der Fahrbereiche und dann bei gleichen Drehzahlen der zu verbindenden Teile stattfinden.

Ein Nachteil dieses Standes der Technik besteht jedoch darin, dass das vorstehend dargelegte Ergebnis nur mit einem erheblichen bauteiletechnischen Aufwand umgesetzt wird. So sind eine Vielzahl von einzelnen Kupplungen innerhalb des Getriebes erforderlich, welche koordiniert durch eine zentrale elektronische Steuervorrichtung anzusteuern sind.

Aus der US 3,396,607, die alle Merkmale des Oberbegriffes des Unabhängigen Anspruchs 1 zeigt, geht eine gattungsgemäße Getriebeanordnung hervor, welche im Gegensatz zu dem vorstehend erläuterten Stand der Technik recht wenige einzelne Bauteile erfordert. Allerdings sind einige Bauteile recht hoch funktionsintegriert. So ist das Hohlrad der nachgeschalteten Planetenstufe neben der Innengewindeverzahnung auch mit einer Außenverzahnung versehen und bildet gleichzeitig auch ein Kupplungsteil für eine angrenzende Kupplung. Derartige Bauteile sind recht aufwendig in der Fertigung und sind wegen der hohen Funktionsintegration reparaturanfällig.

Aus der JP 05 215 200 geht eine weitere Getriebeanordnung mit einem hydrostatischen Getriebe und einer abtriebsseitigen Planetenstufe hervor, bei welcher mehrere Stirnradstufen im Zusammenwirken mit Kupplungen zur Steuerung des Kraftflusses durch die Getriebeanordnung Verwendung finden. Zwar lässt sich mit dieser technischen Lösung ein recht großes Drehzahlspektrum abdecken; jedoch steht dem ein beträchtlicher Aufwand an einzelnen, teilweise sehr speziellen Bauteilen gegenüber.

Es ist daher die Aufgabe der vorliegenden Erfindung, eine Getriebeanordnung der vorstehend beschriebenen Art dahingehend weiterzuverbessern, dass ein breiter Fahrbereich der Getriebeanordnung unter Einsatz eines optimalen Bauteileaufwands möglich wird.

Die Aufgabe wird ausgehend von einer Getriebeanordnung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass entsprechend eines ersten Fahrbereichs das Sonnenrad der einfachen Planetenstufe über eine erste Kupplung mit einem Hohlrad der Planetenstufe in Wirkverbindung steht, so dass die Abtriebsdrehzahl der Planetenstufe linear von der Abtriebsdrehzahl des hydrostatischen Getriebes abhängt, und dass ferner entsprechend eines zweiten Fahrbereiches das Sonnenrad über eine zweite Kupplung mit der Getriebeantriebswelle der Getriebeanordnung in Wirkverbindung steht, so dass sich die Drehzahlen von Hohlrad und Sonnenrad überlagern, und dass die erste Kupplung über eine Getriebestufe mit dem Hohlrad der Planetenstufe in Wirkverbindung steht, um im ersten Fahrbereich das Hohlrad und das Sonnenrad der Planetenstufe miteinander zu verbinden, und dass das Hohlrad innenradial über eine Getriebestufe mit dem hydrostatischen Getriebe in Wirkverbindung steht, wobei diese Getriebestufe ein auf einer Welle starr angeordnetes Stirnrad besitzt.

Der Vorteil der erfindungsgemäßen Getriebeanordnung besteht insbesondere darin, dass hiermit ein hohes Übersetzungsverhältnis durch Wechsel der Betriebsweise über zwei Kupplungen möglich ist, wodurch zwei sich einander ergänzende Fahrbereiche für die Vorwärtsfahrt eines Fahrzeuges zur Verfügung gestellt werden. Unter Hinzufügung einer weiteren Kupplung können auch zwei Fahrbereiche für die Rückwärtsfahrt des Fahrzeuges bereitgestellt werden. Der recht geringe Aufwand von mechanischen Bauteilen resultiert daraus, dass nur eine Planetenstufe als Überlagerungsstufe eingesetzt wird. Im ersten Fahrbereich werden das Hohlrad und das Sonnenrad der Planetenstufe über die Kupplung miteinander verbunden. Der Antrieb erfolgt dabei ausgehend von der Getriebeeingangswelle über das hydrostatische Getriebe in die Planetenstufe, deren Planetensteg den Abtrieb bildet. Im zweiten Fahrbereich erfolgt der Antrieb leistungsverzweigt zum Einen direkt mechanisch über die zweite Kupplung auf das Sonnenrad der Planetenstufe und zum Anderen auch über das hydrostatische Getriebe auf das Hohlrad der Planetenstufe. Der Abtrieb erfolgt weiterhin über den Planetensteg. Die erste Kupplung ist in diesem Fall geöffnet.

Vorzugsweise ist vorgesehen, dass beide Getriebestufen je ein auf einer gemeinsamen Welle starr angeordnetes Stirnrad besitzen, und dass die Welle vom hydrostatischen Getriebe angetrieben ist. Hierdurch ergibt sich eine besonders bauteilsparende Anordnung.

Vorteilhafterweise erfolgt die Umschaltung zwischen dem ersten Fahrbereich und dem zweiten Fahrbereich durch ein wechselseitiges Betätigen der beiden Kupplungen über eine zentrale Steuereinheit, welche zugleich auch das hydrostatische Getriebe nach Maßgabe des Fahrwunsches ansteuert.

Die erfindungsgemäße Getriebeanordnung kann zum Zwecke einer Drehzahlanpassung verschiedene Getriebestufen enthalten. So treibt die Getriebeeintriebswelle das hydrostatische Getriebe vorzugsweise über eine zwischengeschaltete Getriebestufe an. Des Weiteren kann die erste Kupplung über eine weitere Getriebestufe mit dem Hohlrad der Planetenstufe in Wirkverbindung stehen, also indirekt. Ferner kann es aber auch von Vorteil sein, wenn auch das Hohlrad über eine zwischengeschaltete Getriebestufe mit dem hydrostatischen Getriebe in Wirkverbindung steht.

Gemäß einer weiteren die Erfindung verbessernden Maßnahme ist vorgesehen, dass zwischen der Getriebeeintriebswelle und dem Sonnenrad der Planetenstufe mindestens eine weiteren zusätzliche Kupplung angeordnet ist, um auch im Rückwärtslauf mindestens einen zweiten Fahrbereich zu ermöglichen. Vorzugsweise steht auch diese zusätzliche Kupplung über eine zugeordnete Getriebestufe mit einem drehrichtungsändernden Zwischenrad mit der Getriebeeintriebswelle in Wirkverbindung.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: ein Schaltbild einer Getriebeanordnung mit Getriebemitteln zur Drehzahlüberlagerung in einer ersten Ausführungsform,
- Fig.2: ein Schaltbild einer Getriebeanordnung mit Getriebemitteln zur Drehzahlüberlagerung in einer zweiten Ausführungsform, und
- Fig.3: ein Schaltbild einer anderen Getriebeanordnung mit Getriebemitteln zur Drehzahlüberlagerung.

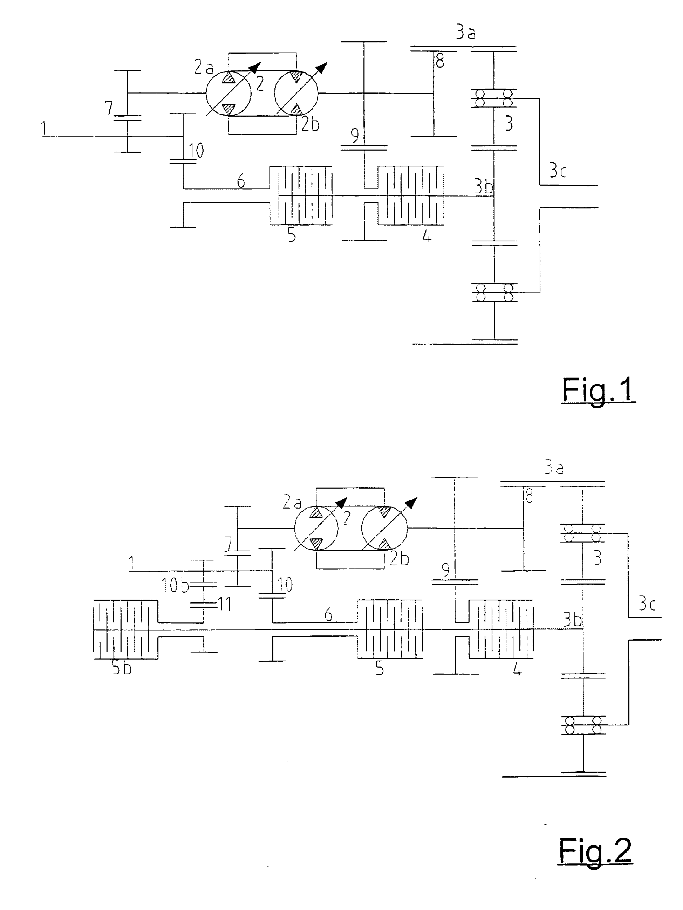

Gemäß Fig.1 besteht die Getriebeanordnung dem Kraftfluss folgend aus einer eingangsseitigen Getriebeeintriebswelle 1, welche durch einen - nicht weiter dargestellten - Motor angetrieben wird. Der Getriebeeintriebswelle 1 ist ein hydrostatisches Getriebe 2 nachgeschaltet. Das hydrostatische Getriebe 2 besteht aus einer verstellbaren Hydraulikpumpe 2a, die mit einem verstellbaren Hydraulikmotor 2b hydrostatisch gekoppelt ist. Ausgangsseitig des hydrostatischen Getriebes 2 ist eine Planetenstufe 3 angekoppelt. Entlang eines von der Getriebeeintriebswelle 1 über einer Getriebestufe 10 und einer fortführenden Welle 6 verlaufenden parallelen Kraftfluss sind zwei in Reihe zueinander geschalteter Kupplungen 4 und 5 vorgesehen. Die endseitige Kupplung 4 steht mit dem Sonnenrad 3b der Planetenstufe 3 in Verbindung. Der Planetenträger 3c der Planetenstufe 3 bildet den Abtrieb der Getriebeanordnung.

Der Kraftfluss geht in einem ersten Fahrbereich von der Getriebeeintriebeswelle 1 über eine eingangsseitige Getriebestufe 7 auf die Antriebswelle der Verstellpumpe 2a des hydrostatischen Getriebes 2. Die Abtriebswelle des hydrostatischen Motors 2b des hydrostatischen Getriebes 2 steht über nachgeschaltete Getriebestufen 8 und 9 in Wirkverbindung mit dem Hohlrad 3a der Planetenstufe 3 sowie auch mit der Kupplung 4 des parallelen Kraftflusses. Durch Schließen der Kupplung 4 werden im ersten Fahrbereich Hohlrad 3a und Sonnenrad 3b der Planetenstufe 3 über die Getriebestufen 8 und 9 zusätzlich miteinander verbunden, wodurch die Anzahl der Freiheitsgrade der Planetenstufe 3 reduziert wird, so dass die Abtriebsdrehzahl des Planetensteges 3c direkt von der Abtriebsdrehzahl des Hydraulikmotors 2b abhängt.

Wird nun bei konstanter Antriebsdrehzahl die verstellbare Hydraulikpumpe 2a aus der Nullstellung auf größeres Fördervolumen ausgeschwenkt, erhöht sich proportional zu dem ansteigenden Fördervolumen auch die Drehzahl am Hydraulikmotor 2b und damit die Abtriebsdrehzahl des hydrostatischen Getriebes 2. Ein Verschwenken der Verstellpumpe 2a in die entgegengesetzte Richtung bedeutet eine andere Drehrichtung am Hydraulikmotor 2b und damit eine Rückwärtsfahrt des Fahrzeuges.

Die Übersetzungen der Getriebestufen 7 bis 10 sowie der Planetenstufe 3 sind derart aufeinander abgestimmt, dass bei maximaler Drehzahl des verstellbaren Hydraulikmotors 2b das Sonnenrad 3b und die Welle 6 des parallelen Kraftflusses die gleiche Drehzahl aufweist. In diesem Betriebspunkt wird mittels einer - hier nicht weiter dargestellten - Steuereinheit die erste Kupplung 4 geöffnet und die zweite Kupplung 5 geschlossen. Demzufolge dreht das Sonnenrad 3b der Planetenstufe 3 mit konstanter Drehzahl gleichsinnig mit dem Planetensteg 3c während das Hohlrad 3a mit maximaler Drehzahl entgegengesetzt rotiert. Wird nun durch Veränderung der Übersetzung des hydrostatischen Getriebes 2 durch entsprechende Ansteuerung über die Steuereinheit das Hohlrad 3a erst verzögert und dann in entgegengesetzte Richtung beschleunigt, so ergibt sich durch eine Drehzahlüberlagerung ein weiteres Beschleunigen des Planetensteges 3c, was dem zweiten Fahrbereich entspricht.

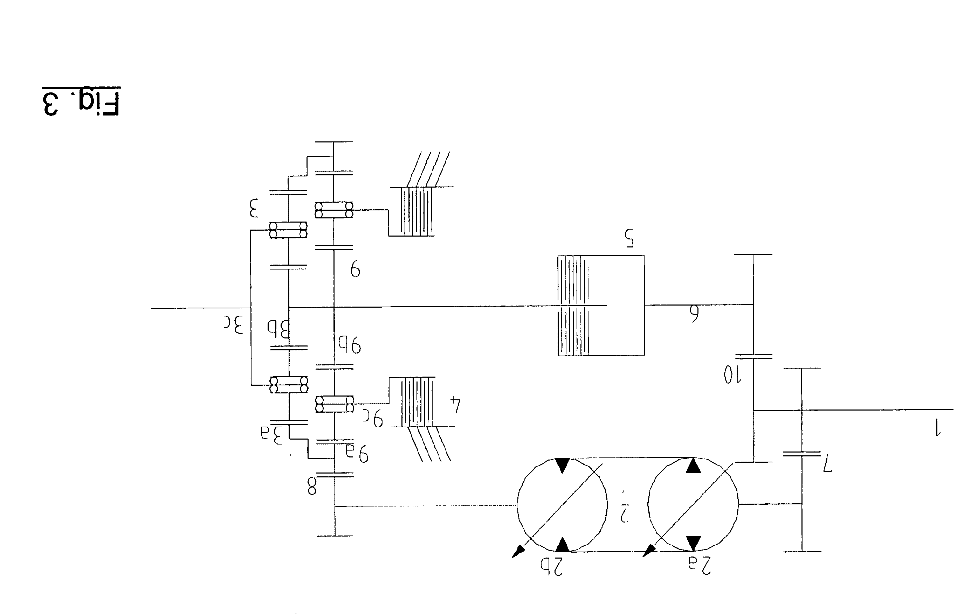

Gemäß Fig.2 ist zusätzlich zu der vorstehend beschriebenen Ausführungsform neben der Getriebestufe 10 mit Kupplung 5 eine weitere Kupplung 5b mit zugeordneter Getriebestufe 10b eingeführt. Die Getriebestufe 10b enthält ein Zwischenrad 11 zur Änderung der Drehrichtung. Über diese zusätzlichen Bestandteile der Getriebeanordnung kann auch für die Rückwärtsfahrt über eine entsprechende Ansteuerung durch die Steuereinheit ein zweiter Fahrbereich dargestellt werden.

Gemäß Fig.3 besitzt - im Unterschied zum erstgenannten Ausführungsbeispiel - nur die als Stirnradgetriebe ausgebildete Getriebestufe 8 ein auf der Welle starr angeordnetes Stirnrad, das vom hydrostatischen Getriebe 2 angetrieben ist. Bei dieser Lösung handelt es sich nicht um ein Ausführungsbeispiel der Erfindung, sondern um ein Beispiel, das das Verständnis der Erfindung erleichtert. Das besagte Stirnrad kämmt wiederum mit einem außenverzahnten Hohlrad 9a der nachgeschalteten Getriebestufe 9, die hier ein Planetengetriebe ist. Die Kupplung 4 dient dem Fixieren des Planetenstegs 9c von Getriebestufe 9. Die Sonnenräder 3b und 9b der Getriebestufen 3 bzw. 9 sind auf einer gemeinsamen Welle angeordnet, die mit der Kupplung 5 fixierbar ist. Die der Getriebestufe 9 nachgeschaltete Planetenstufe 3 wird auch über ein gemeinsames Hohlrad 9a und 3a angetrieben. Der Abtrieb bei der Planetenstufe 3 erfolgt ebenfalls über den Planetensteg 3c.

### Bezugszeichenliste

- **1**: Getriebeeintriebswelle
- **2**: hydrostatisches Getriebe
- **3**: Planetenstufe
- **3a**: Hohlrad
- **3b**: Sonnenrad
- **3c**: Planetensteg
- **4**: erste Kupplung
- **5**: zweite Kupplung
- **6**: Welle
- **7**: Getriebestufe
- **8**: Getriebestufe
- **9**: Getriebestufe
- **10**: Getriebestufe
- **11**: Zwischenrad

## Patentansprüche

1. Getriebeanordnung, für einen Antrieb eines Fahrzeuges, mit einem hydrostatischen Getriebe (2), dem mindestens eine Planetenstufe (3) nachgeschaltet ist, wobei die Ankopplung der Planetenstufe (3) an das hydrostatische Getriebe (2) über zwischengeschaltete Getriebemittel zur Drehzahlüberlagerung innerhalb der Planetenstufe (3) erfolgt, **dadurch gekennzeichnet, dass** entsprechend eines ersten Fahrbereichs das Sonnenrad (3b) der einfachen Planetenstufe (3) über eine erste Kupplung (4) mit dem Hohlrad (3a) der Planetenstufe (3) in Wirkverbindung steht, so dass die Abtriebsdrehzahl der Planetenstufe (3) linear von der Abtriebsdrehzahl des hydrostatischen Getriebes (2) abhängt, dass das Hohlrad (3a) innenradial über eine Getriebestufe (8) mit dem hydrostatischen Getriebe (2) in Wirkverbindung steht, wobei die Getriebestufe (8) ein auf einer Welle starr angeordnetes Stirnrad besitzt,
dass entsprechend eines zweiten Fahrbereichs das Sonnenrad (3b) über eine zweite Kupplung (5) mit der Getriebeeintriebswelle (1) der Getriebeanordnung in Wirkverbindung steht, so dass sich infolge Leistungsverzweigung die Drehzahlen von Hohlrad (3a) und Sonnenrad (3b) überlagern,
und dass die erste Kupplung (4) über eine Getriebestufe (9) mit dem Hohlrad (3a) der Planetenstufe (3) in Wirkverbindung steht,
um im ersten Fahrbereich das Hohlrad (3a) und das Sonnenrad (3b) der Planetenstufe (3) miteinander zu verbinden.

2. Getriebeanordnung nach Anspruch 1,
**dadurch gekennzeichnet, dass** beide Getriebestufen (8 und 9) je ein auf einer gemeinsamen Welle starr angeordnetes Stirnrad besitzen, und dass die Welle vom hydrostatischen Getriebe (2) angetrieben ist.

3. Getriebeanordnung nach Anspruch 1,
**dadurch gekennzeichnet, dass** die Umschaltung zwischen dem ersten Fahrbereich und dem zweiten Fahrbereich durch wechselseitiges Betätigen der Kupplungen (4 und 5) über eine zentrale Steuereinheit erfolgt, welche zugleich auch das hydrostatische Getriebe (2) nach Maßgabe des Fahrwunsches ansteuert.

4. Getriebeanordnung nach Anspruch 1,
**dadurch gekennzeichnet, dass** die Getriebeeintriebswelle (1) über eine Getriebestufe (7) das hydrostatische Getriebe (2) antreibt.

5. Getriebeanordnung nach Anspruch 1,
**dadurch gekennzeichnet, dass** die zweite Kupplung (5) über eine Getriebestufe (10) mit der Getriebeeintriebswelle (1) in Wirkverbindung steht.

6. Getriebeanordnung nach Anspruch 1,
**dadurch gekennzeichnet, dass** das hydrostatische Getriebe (2) aus einer verstellbaren Hydraulikpumpe (2a) besteht, die mit einem verstellbaren Hydraulikmotor (2b) hydrostatisch gekoppelt ist.

7. Getriebeanordnung nach einem der vorstehenden Ansprüche,
**dadurch gekennzeichnet, dass** zwischen der Getriebeeintriebswelle (1) und dem Sonnenrad (3b) der Planetenstufe (3) mindestens eine zusätzliche Kupplung (5b) angeordnet ist, um auch im Rückwärtslauf mindestens einen zweiten Fahrbereich zu ermöglichen.

8. Getriebeanordnung nach Anspruch 7,
**dadurch gekennzeichnet, dass** die zusätzliche Kupplung (5b) über eine zugeordnete Getriebestufe (10b) mit einem drehrichtungsändernden Zwischenrad (11) mit der Getriebeeintriebswelle (1) in Wirkverbindung steht.

## Claims

1. A transmission assembly for driving a vehicle, comprising a hydrostatic transmission (2) having at least one planetary stage (3) downstream of it, wherein coupling of the planetary stage (3) to the hydrostatic transmission (2) is effected via intermediate transmission means for speed overlap within the planetary stage (3),
**characterised in that** according to a first gear range the sun gear (3b) of the single planetary stage (3) effectively cooperates with the ring gear (3a) of the planetary stage (3) via a first clutch (4), so that the output speed of the planetary stage (3) is a linear function of the output speed of the hydrostatic transmission (2),
**in that** the ring gear (3a) effectively cooperates with the hydrostatic transmission (2) radially on the inside via a transmission stage (8), wherein the transmission stage (8) has a spur gear rigidly arranged on a shaft,
**in that** according to a second gear range the sun gear (3b) effectively cooperates with the transmission input shaft (1) of the transmission assembly via a second clutch (5), so that the speeds of the ring gear (3a) and the sun gear (3b) overlap due to torque division, and
**in that** the first clutch (4) cooperates with the ring gear (3a) of the planetary stage (3) via a transmission stage (9),
in order to connect the ring gear (3a) and the sun gear (3b) of the planetary stage (3) with each other in the first gear range.

2. The transmission assembly according to claim 1,
**characterised in that** the two transmission stages (8 and 9) each have a spur gear rigidly arranged on a common shaft, and **in that** the shaft is driven by the hydrostatic transmission (2).

3. The transmission assembly according to claim 1,
**characterised in that** switching between the first gear range and the second gear range is carried out by alternately operating the clutches (4 and 5) via a central control unit which simultaneously drives the hydrostatic transmission (2) in accordance with the desired driving.

4. The transmission assembly according to claim 1,
**characterised in that** the transmission input shaft (1) drives the hydrostatic transmission (2) via a transmission stage (7).

5. The transmission assembly according to claim 1,
**characterised in that** the second clutch (5) effectively cooperates with the transmission input shaft (1) via a transmission stage (10).

6. The transmission assembly according to claim 1,
**characterised in that** the hydrostatic transmission (2) consists of an adjustable hydraulic pump (2a) hydrostatically coupled with an adjustable hydraulic motor (2b).

7. The transmission assembly according to any one of the preceding claims,
**characterised in that** at least one additional clutch (5b) is arranged between the transmission input shaft (1) and the sun gear (3b) of the planetary stage (3) in order to facilitate at least one second gear range also in reverse.

8. The transmission assembly according to claim 7,
**characterised in that** the additional clutch (5b) effectively cooperates with the transmission input shaft (1) via an associated transmission stage (10b) having a reversing intermediate gear (11).

## Revendications

1. Agencement de transmission, pour un entraînement d'un véhicule automobile, comprenant une transmission hydrostatique (2) avec au moins un étage à planétaire (3) monté à sa suite, dans lequel l'accouplement de l'étage à planétaire (3) à la transmission hydrostatique (2) a lieu par l'intermédiaire d'organes de transmission destinés à la superposition de vitesse de rotation à l'intérieur de l'étage à planétaire (3), **caractérisé en ce que**,
en correspondance d'une première plage de fonctionnement, la roue solaire (3b) de l'étage à planétaire simple (3) est en liaison d'action, via un premier accouplement (4), avec la couronne intérieure (3a) de l'étage à planétaire (3), de sorte que la vitesse de rotation en sortie de l'étage à planétaire (3) dépend linéairement de la vitesse de rotation en sortie de la transmission hydrostatique (2),
**en ce que** la couronne intérieure (3a) est en liaison d'action radialement vers l'intérieur avec la transmission hydrostatique (2) via un étage de transmission (8), ledit étage de transmission (8) possédant un engrenage droit agencé de façon solidaire sur un arbre,
**en ce que**, en correspondance d'une seconde plage de fonctionnement, la roue solaire (3b) est en liaison d'action, via un second accouplement (5), avec l'arbre d'entrée (1) de l'agencement de transmission, de sorte que les vitesses de rotation de la couronne intérieure (3a) et de la roue solaire (3b) se superposent en raison d'une ramification de puissance, et **en ce que** le premier accouplement (4) est en liaison d'action avec la couronne intérieure (3a) de l'étage à planétaire (3) via un étage de transmission (9), afin de relier l'une à l'autre la couronne intérieure (3a) et la roue solaire (3b) de l'étage à planétaire (3) dans la première plage de fonctionnement.

2. Agencement de transmission selon la revendication 1,
**caractérisé en ce que** les deux étages de transmission (8 et 9) possèdent chacun un engrenage droit agencé de façon solidaire sur un arbre commun, et **en ce que** l'arbre est entraîné par la transmission hydrostatique (2).

3. Agencement de transmission selon la revendication 1, **caractérisé en ce que** la commutation entre la première plage de fonctionnement et la seconde plage de fonctionnement a lieu par actionnement alternatif des accouplements (4 et 5) via une unité de commande centrale, laquelle pilote simultanément également la transmission hydrostatique (2) selon la mesure du souhait de fonctionnement.

4. Agencement de transmission selon la revendication 1, **caractérisé en ce que** l'arbre d'entrée (1) entraîne la transmission hydrostatique (2) via un étage de transmission (7).

5. Agencement de transmission selon la revendication 1, **caractérisé en ce que** le second accouplement (5) et en liaison d'action avec l'arbre d'entrée (1) de la transmission via un étage de transmission (10).

6. Agencement de transmission selon la revendication 1, **caractérisé en ce que** la transmission hydrostatique (2) est constituée par une pompe hydraulique réglable (2a), laquelle est couplée de manière hydrostatique avec un moteur hydraulique réglable (2b).

7. Agencement de transmission selon l'une des revendications précédentes, **caractérisé en ce que**, entre l'arbre d'entrée (1) et la roue solaire (3b) de l'étage à planétaire (3), est agencé au moins un accouplement additionnel (5b) afin de rendre également possible au moins une seconde plage de fonctionnement en marche arrière.

8. Agencement de transmission selon la revendication 7, **caractérisé en ce que** l'accouplement additionnel (5b) est en liaison d'action, via un étage de transmission associé (10b) doté d'un pignon intermédiaire (11) qui modifie le sens de rotation, avec l'arbre d'entrée (1) de la transmission.
